# EUROPEAN PATENT SPECIFICATION

(11) **EP 0 749 885 B1**
(45) Date of publication and mention of the grant of the patent: **15.07.1998**
(21) Application number: 95560003.6
(22) Date of filing: 21.06.1995
(51) Int. Cl.: B62B 1/12

(54) **Collapsible shopping trolley**
Zusammenfaltbarer Einkaufswagen
Chariot d'achat pliable

(43) Date of publication of application: 27.12.1996
(73) Proprietor: Garcia Moll, Jaime, 03700 Denia (ES)
(72) Inventor: Garcia Moll, Jaime, 03700 Denia (ES)
(74) Representative: Sanz-Bermell Martinez, Alejandro

(56) References cited:
- EP-A- 0 348 552
- EP-A- 0 399 364
- FR-A- 2 567 470

## Description

The sector involved in the technique used for this application is in the trolleys used for taking shopping home from the shops, avoiding permanently holding this up, unsupported.

Description of the prior state of the art. ES 2011354 A1 for improvements added to the subject of the main patent ES 2008229 A1 for a folding trolley for shopping, consisting of a trolley which includes anchorage points for securing the unfolded position consisting of flexible flanges with an extension which can be moved by a peripheral rib which goes into the flanges of the square bar on the flanges. The main patent consists of an arrangement of which the aforementioned is an alternative by means of which the pieces that fold have pins which fit in according to the way they turn around the spindle articulated by the handle, with the ensemble of the securing parts being made up in a similar way to those used in its improvement.

In said patents the securing system, as well as the folding system, is complex and expensive; they include complex mechanisms made of one sole piece made of injected plastic, which need a particular elasticity to work properly, and which give rise to breakdowns and breakages when used repeatedly: the handles shown in ES 2 008 229 A1 are made of square tubes, more expensive and difficult to work, through the need to adapt terminals in this shape in the aforementioned patents, without there being any device for binding the handles when extended and thus any amount of pressure can determine their partial folding.

The aim of the present invention is an improved device for folding shopping trolleys, in order to obtain perfect securing of the telescopic handle of the trolley in its extension, simple securing of the base of the trolley in its unfolded position through the insertion of a pin into the tube of the handle; an efficient unlocking device for the folding system by means of an eccentric cam which removes the pin, not subject to wear, a seat for each one of said parts of the handle when set in the lower part of the platform, with all of these being made in cylindrical section tube.

In order to make the following explanation clearer, three sheets of drawings are enclosed, representing the essence of this invention in six figures.

Figure 1 shows a general view of the trolley in the unfolding position.

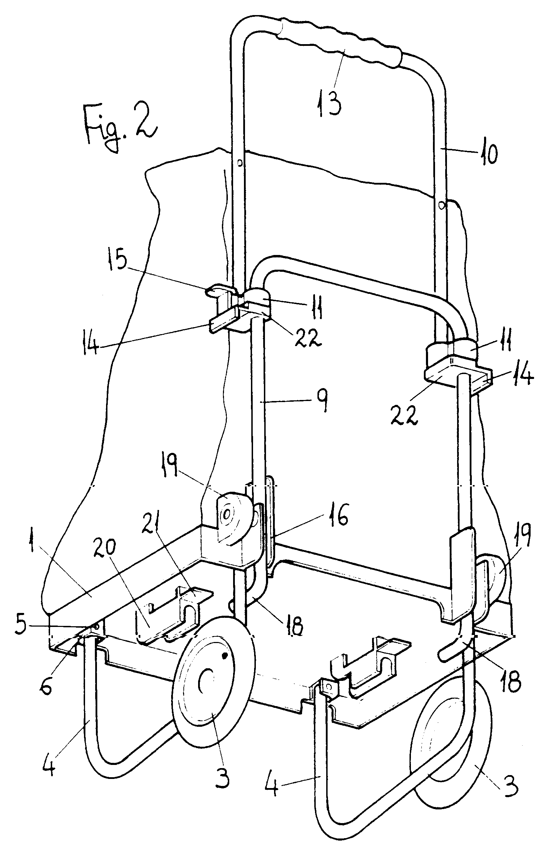

Figure 2 shows a view of the unfolded trolley.

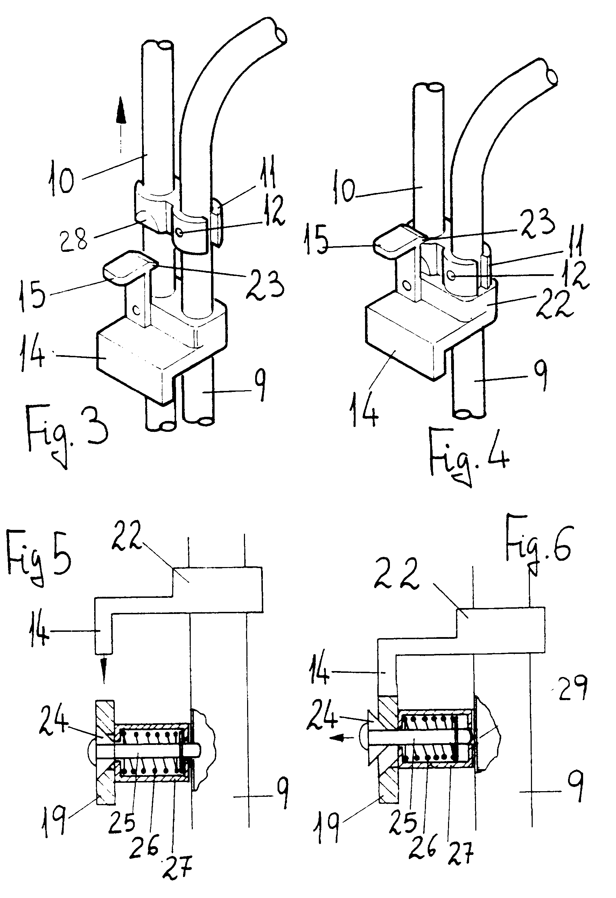

Figure 3 shows a detail of the fastening device for the handles in the unfolded condition.

Figure 4 shows a detail according to figure 3 after fastening.

Figure 5 shows a detail of the device for freeing the pin which secures the handle to the base.

Figure 6 shows a detail of the device in Figure 5 with the pin removed.

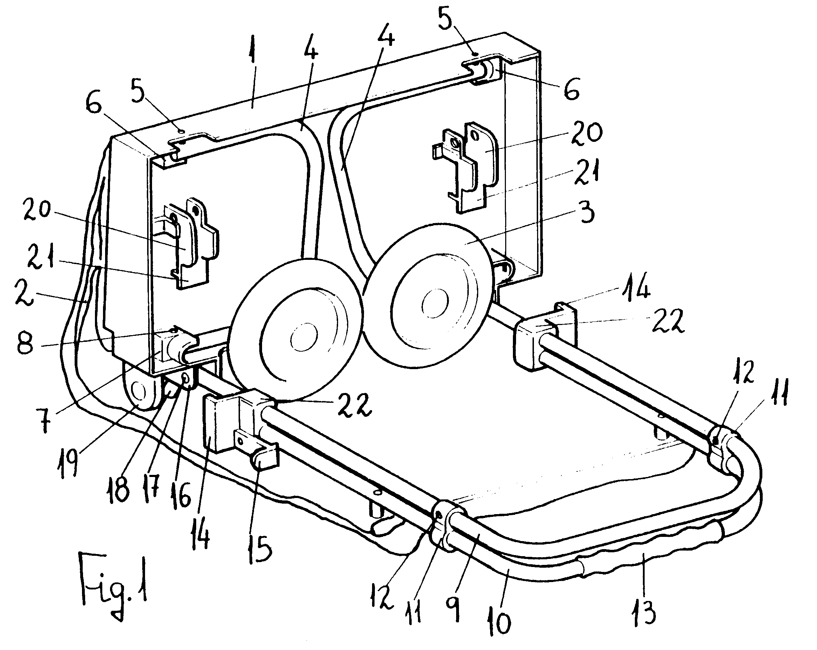

In said figures 1 is the base, 2 being the bag, 3 the wheels, 4 the tubes or frame which hold the wheels, 5 the spindle for articulation of the frame tubes for the wheels, and 6 and 7 the articulation boxes for these frames, 8 the spindle of the articulation box 7, 9 being the lower tube, 10 the upper tube, and 11 the upper coupling of the tubes, and 12 the attachment of coupling 11 to the lower tube, 13 the handle grip, 14 being the loosening flange, 15 the securing-loosening tab, 16 the articulation box of the lower tube 9, 17 being the spindle of box 16, 18 the lower curved end of the tube 9, and 19 the mobile cam; 20 is the temporary attachment of the tubes of the folded handle formed by two pieces perpendicular to the base 1 with side reinforcements, 21 the support stop for the tubes in their folded position, 22 being the coupling of the tubes, 23 the wedge of the tab, and 24 the wedge of the mobile cam 19, 25 being the pin linked to the wedge, 26 the spring, and 27 the box which contains the spring 26 and the pin 25, 28 the bevel shaped portion of part 11, and 29 the hole of tube 9.

The folded position arrangement has, as shown in the drawing, a housing within the chassis for the tubes which make up the handle, made up of a pair of elastic tabs with an internal edge which, along with a support stop 21 in the base, hold the tubes against the chassis. The unfolding includes the articulation of the tubes forming the handle around the spindle 17, so turning to become located perpendicular to the base 1, and moving the tubes 4 which comprise the support of the wheels 3 with the lower curved end of said tubes 18.

Tubes 4 are articulated in two articulation boxes provided with the corresponding spindle, shown as 6 and 7, using a well-known structure which allows these to turn only until they form a right angle with the base, with their position in the unfolded arrangement being determined by the curved end 18 of the tube 9 and, at the opposite end, the aforementioned articulation box.

After reaching the position perpendicular to the base 1, tube 9 is secured there by a pin 25 which tends to stick out from the box 16 being inserted into a hole 29 made in said tube so that as the tube 9 moves over this, it is inserted into the aforementioned hole, and so secured.

The tubes comprising the handle have a circular section, and one can move alongside the other thanks to two pieces which are connected to each one of these tubes and which let the other one move, shown with numbers 11 and 22. The one shown as 22 is the lower attachment and is connected to the upper tube shown as 10. The one shown as 11 comprises the upper attachment and is connected to the lower tube 9 by means of the coupling 12. The coupling piece 22 has a lower flange 14 and an upper tab 15. The upper tab in turn has an internal wedge shaped extension 23, that can be secured through elasticity by engaging and stepping over the sharp profile of coupling 11. It can be loosened by moving the tab away from the profile on which this rests.

The coupling piece 11 is roughly in an "8" shape with a perpendicular upper edge and a lower edge in the shape of a bevel 28, which allows the wedge 23 on the tab 15 to fasten over the upper portion of part 11, which in said part has an angle shape.

The coupling 22 is also the part which determines the freeing of the tube 9 fixed to the pin 25. In the position in which both tubes 9 and 10 stand at approximately the same height, the proximity of piece 22 means this is able to press on the mobile cam 19. This mobile cam has a flat outer profile on which the flange 14 presses, thus bringing about the movement. The internal part of said mobile cam is trunco-conical and has inside - from an axial viewpoint - a wedge 24 which is joined to the pin 25. The pin 25 tends to permanently stick out at the opposite side to the wedge through the action of spring 26. As can be seen in figure 6, the pressure of flange 14 on the cam 19 determines the movement of the pin 25 against the action of the spring, as this is joined to the wedge 24, which frees tube 9 to which this was connected through the insertion of pin 25.

The embodiment of this invention is according to the explanation given and in the form described.

This can be used in industrial applications for making improved shopping trolleys.

## Claims

1. Shopping trolley, of the sort which are made up of a platform (1) which articulates tubes (4) which carry the wheels (3), and which have an extendable handle articulated on one edge of said platform (1) and which have means for securing the handle and the wheel support tube structure in folded and unfolded positions, characterized in that the tubes which comprise the handle have a circular section and are connected by a lower coupling (22), fixed to the upper tube (10), and an upper coupling (11), attached to the lower tube (9), which lets these move to extend longitudinally, with the lower coupling (22) being made in a shape with a tab (15) and a wedge (23); the upper coupling (11) has a bevel (28) at the bottom and a perpendicular upper edge; the upper (11) and lower (22) coupling pieces come closer in such a way that the extension formed by the tab (15) can be inserted into the upper profile of the upper coupling (11); the platform (1) has two central seats (20) for securing the upper and lower tubes (9, 10) which make up the handle in their folded position; each of these seats (20) comprises a piece perpendicular to the platform (1), a stop (21) and side reinforcements; a box (16) which has the articulation of a spindle (17) which enables the handle to turn allows curved extensions (18) of the lower tube (9) to move by perpendicularly; along with the articulation of the handle the lower tube (9) of the handle is locked in a position perpendicular to the platform (1), for using the trolley, by means of a locking mechanism comprising an articulation box (16) provided on the platform (1) with a pin (25) on a perpendicular plane, with respect to the lower tube (9), and joined to the articulation box (16), said pin (25) set into a hole (29) made in the body of the lower tube (9); the unlocking mechanism being in said articulation box (16) and being formed of the pin (25) which has one free end which tends to stick out permanently from the side opposite to that of a wedge through the action of a spring (26), with the opposite end of said pin being provided with said conical wedge (24) which rests on a mobile cam (19) conically shaped inside, with a free axial movement, both fitted together, following the movement of said cam (19), determining the movement of the pin (25) against the action of the spring (26).

## Patentansprüche

1. Ein Einkaufsroller mit einem Rahmen (1) mit daran angegliederten Rohren (4) für die den Wagen bewegenden Rollen (3), der über einen ausziehbaren Griff verfügt, der an einem Ende des genannten Rahmens (1) angebracht ist, und der über Mittel verfügt zur Verriegelung des Griffes und der Rollenträgerstruktur in zusammengeklapptem und aufgeklapptem Zustand, dadurch gekennzeichnet, daß die den Griff bildenden Rohre einen runden Abschnitt haben und durch eine untere Kupplung (22) verbunden sind, welche an dem oberen Rohr (10) befestigt ist, und eine obere, am unteren Rohr (9) befestigte Kupplung (11), wodurch ein Ausziehen in Längsrichtung derselben ermöglicht wird, wobei die untere Kupplung aus einem Riegel (15) und einem Keil (23) besteht. Die obere Kupplung (11) hat eine abgeschrägte untere Kante und eine vertikale obere Kante. Das obere (11) und das untere (22) Kupplungteil werden dadurch zusammengebracht, daß die aus dem Riegel (15) bestehende Verlängerung in das obere Profil der oberen Kupplung (11) eingreifen kann. Der Rahmen (1) hat zwei zentrale Lager (20) zur Sicherung des oberen und unteren Rohres (9, 10), die in ihrer zusammenklappten Form den Griff bilden. Jedes dieser Lager (20) besteht aus einem vertikal zum Rahmen (1) verlaufenden Teil, einem Anschlag (21) und seitlichen Verstarkung. Eine Gelenkbox (16) mit einer Achse (17), mit der der Griff gedreht werden kann, ermöglicht, daß gebogene Endstücke (18) des unteren Rohres (9) vertikal beigedreht werden können (siehe Seite 6). Das untere Rohr (9) des Griffes für die Benutzung des Einkaufsrollers ist in einer vertikalen Position an dem Rahmen (1) befestigt mittels eines Verriegelungsmechanismus, der aus einer Gelenkbox (16) mit einem daran befestigten Bolzen (25) besteht, in vertikaler Lage hinsichtlich dem unteren Rohr (9). Zusammen mit dem Gelenk des Griffes greift dieser Bolzen (25) in ein Loch (29) im unteren Rohrkörper (9); weiter verfügt der Einkaufsroller über einen Entriegelungsmechanismus, der sich in dieser Gelenkbox (16) befindet und der aus dem Bolzen (25) besteht. Dieser Bolzen hat ein freies Endstück, das am anderen Ende durch die Wirkung einer Feder (26) auf einen Keil gepresst wird. Das gegenüberliegende Ende des genannten Bolzens ist mit einem kegelförmigen Keil (24) versehen, der auf einem beweglichen, innen kegelförmig ausgebildetem Mitnehmer (19) mit einer freien Achsbewegung ruht. Beide sind miteinander verbunden und folgen der Bewegung des genannten Mitnehmers (19), wodurch die Bewegung des Bolzens (25) gegen die Federwirkung (26) bestimmt wird.

## Revendications

1. Chariot d'achat pliable, de ceux qui sont formés par une plateforme (1) articulant des tubes (4) qui supportent les roulettes (3), et qui possèdent une poignée extensible articulée sur une arête de la dite plateforme (1) et qui sont munis de moyens permettant d'assurer la poignée et la structure de support des tubes sur une position pliée et une position dépliée, qui se caractérise par le fait que les tubes qui forment la poignée ont une section circulaire et sont assemblés moyennant un assemblage inférieur (22), qui est fixé sur le tube supérieur (10), ainsi qu'un assemblage supérieur (11), fixé au tube inférieur (9), qui permet son déplacement en extension longitudinale, l'assemblage inférieur (22) étant disposé de sorte qu'il est muni d'un talon (15) et d'une cale (23); l'assemblage supérieur (11) est muni d'un biseau inférieur (28) et d'un rebord supérieur perpendiculaire; les pièces d'assemblage supérieure (11) et inférieure (22) se rapprochent de telle sorte que l'extension formée par le talon (15) peut être insérée à l'intérieur du profil supérieur de l'assemblage supérieur (11); la plateforme (1) est munie de deux logements centraux (20) permettant d'assurer en position pliée les logements des tubes supérieur (9) et inférieur (10) qui forment la poignée; chacun des logements en question (20) comprend une pièce perpendiculaire à la plateforme (1), un butoir (21) et des renforts latéraux; un boîtier (16) contenant l'articulation d'un axe (17) qui permet à la poignée de tourner, permet le passage perpendiculaire des extensions incurvées (18) du tube inférieur (9); tout au long de l'articulation de la poignée, le blocage du tube inférieur (9) en position d'utilisation du chariot perpendiculaire à la plateforme (1), est permis moyennant un mécanisme de blocage qui comprend un boîtier d'articulation(16) disposé sur la plateforme (1) avec une tige (25) sur un plan perpendiculaire par rapport au tube inférieur (9), et couplé au boîtier d'articulation (16), disposé sur la plateforme (1) (avec l'articulation de la poignée); la dite tige (25) est située dans un orifice (29) usiné dans le corps du tube inférieur (9). Le boîtier du mécanisme de déblocage étant dans la dite position et qui est formé par la tige (25) qui possède un bout libre qui tend à déborder en permanence du bord opposé à celui d'une cale, grâce à l'action d'un ressort (26), l'autre extrémité du dit pivot étant muni de la dite cale conique (24) qui repose sur une came mobile (19), qui a une forme conique à l'intérieur, munie d'un mouvement axial libre, les deux étant aseemblées, le déplacement de la dite came (19), déterminant le déplacement de la cheville (25) contre l'action du ressort (26).
